# EUROPÄISCHE PATENTSCHRIFT

(11) **EP 3 047 226 B1**
(45) Veröffentlichungstag und Bekanntmachung des Hinweises auf die Patenterteilung: **06.03.2019**
(21) Anmeldenummer: 14796660.0
(22) Anmeldetag: 18.09.2014
(51) Int. Cl.: F28F 9/02, F28D 20/02, F28F 1/20, F28D 20/00

(54) **VORRICHTUNG UND VERFAHREN ZUM ZWISCHENSPEICHERN THERMISCHER ENERGIE**
DEVICE AND METHOD FOR TEMPORARY STORAGE OF THERMAL ENERGY
DISPOSITIF ET PROCÉDÉ DE STOCKAGE INTERMÉDIAIRE D'UNE ÉNERGIE THERMIQUE

(30) Priorität: 19.09.2013 AT 505952013
(43) Veröffentlichungstag der Anmeldung: 27.07.2016
(73) Patentinhaber: Technische Universität Wien, 1040 Wien (AT)
(72) Erfinder: HAIDER, Markus, A-1130 Wien (AT); SCHWAIGER, Karl, A-3430 Tulln (AT); PONWEISER, Karl, A-2700 Wiener Neustadt (AT); WALTER, Heimo, A-1160 Wien (AT)
(74) Vertreter: Sonn & Partner Patentanwälte
(86) Internationale Anmeldenummer: PCT/AT2014/050211
(87) Internationale Veröffentlichungsnummer: WO 2015/039158

(56) Entgegenhaltungen:
- EP-A2- 1 010 961
- WO-A1-2008/135100
- DE-U1-202008 002 409

## Beschreibung

Die Erfindung betrifft eine Vorrichtung zum Zwischenspeichern thermischer Energie gemäß dem Oberbegriff von Anspruch 1.

Weiters bezieht sich die Erfindung auf ein Verfahren zum Zwischenspeichern thermischer Energie gemäß Anspruch 14.

Die EP 1 010 961 A2 bezieht sich auf einen Wärmespeicher nach dem Oberbegriff des Anspruchs 1.

Im Stand der Technik sind Latentwärmespeicher in vielfältigen Ausführungen bekannt. Solche Latentwärmespeicher nutzen die Enthalpieänderung zufolge von Phasenwechselvorgängen innerhalb eines Wärmespeichermediums. Als Wärmespeichermedium können z.B. bestimmte Salze, wie Nitratsalze, verwendet werden, aber auch Metallegierungen oder Paraffine. Diese Materialien nehmen beim Aufschmelzen hohe Mengen von Wärmeenergie auf, die beim Entladen des Latentwärmespeichers als Erstarrungswärme wieder abgegeben wird.

Bei einem Verfahren zum Einspeichern von Wärmeenergie in einen Latentwärmespeicher mittels eines Wärmeträgermediums liegt das Wärmeträgermedium während des Wärmeaustauschs mit dem Phasenwechselmaterial in einer zweiphasigen Strömung bestehend aus einer Wasser- und einer Dampfkomponente vor (vgl. "Test and Evaluation of a Thermal Energy Storage System for Direct Steam Generation", D. Laing et al., Conference Proceeding, SolarPace 2011).

Durch die Verwendung der zweiphasigen Strömung kann der Umlaufmassenstrom gegenüber solchen Anlagen gesenkt werden, bei welchen ein einphasiges Wärmeträgermedium verwendet wird. Dieser Vorteil ist insbesondere darauf zurückzuführen, dass der Wärmeübergangskoeffizient der Zweiphasenströmung wesentlich höher als jener der einphasigen Strömung ist. Ein zweiter Grund sind die bei einphasiger Strömung auftretenden Temperaturänderungen, welche die für das Ein- und Ausspeichern benötigte Temperaturdifferenz vergrößern. Der niedrigere Wärmeübergangskoeffizient der Einphasenströmung muss daher einerseits durch entsprechend höhere Massenströme beim Wärmeaustausch kompensiert werden. Andererseits muss der Massenstrom in einem einphasigen System wegen der Abkühl- bzw. Aufheiz-Effekte ohnehin vergleichsweise hoch eingestellt werden.

Die Anlage von Laing et al. funktioniert insbesondere im Hinblick auf das Ausspeichern von Wärmeenergie zufriedenstellend, wenn der flüssige Bestandteil des Wärmeträgermediums verdampft wird. Bei umfangreichen Forschungsarbeiten hat sich jedoch herausgestellt, dass der beim Einspeichern von Wärmeenergie in das Phasenwechselmaterial auftretende Kondensationsprozess Probleme bereitet, da die Eigenschaften der Zweiphasenströmung schwieriger zu kontrollieren sind.

Aus der EP 0 510 263 A1 ist ein Latentwärmespeicher mit einem geschlossenen Behälter bekannt geworden. Der Behälter ist bodenseitig mit einem Wärmeübertrager zum Wärmeeintrag und deckenseitig mit einem Wärmeübertrager zum Wärmeaustrag versehen. Das Latentwärmespeichermaterial befindet sich im Wärmespeicher in Behälterteilen mit flexiblen Wänden.

DE 10 2011 083 147 A1 beschreibt eine Wärmespeichervorrichtung mit einem Behälter, in welchem ein Wärmespeichermedium aufgenommen ist. Bei dem Wärmespeichermedium handelt es sich um ein Phasenübergangsmaterial. Das Wärmespeichermaterial umströmt eine schlangenförmige Rohrleitung, die sich mit einer Zuflussöffnung und einer Abflussöffnung durch die Wandung des Behälters erstreckt.

Die US 4,158,384 A offenbart ein weiteres Wärmespeichersystem, bei welchem in einem unterteilten Behälter ein flüssiges Wärmespeichermedium vorgesehen ist. Zudem ist eine Steuerung vorgesehen, um die Flüssigkeit mit der höchsten Temperatur im Inneren zu konzentrieren. Dadurch können Wärmeverluste minimiert werden. Demgegenüber setzt sich die vorliegende Erfindung zum Ziel, eine Vorrichtung und ein Verfahren zum Zwischenspeichern thermischer Energie, wie eingangs erwähnt, zu schaffen, wobei die Eigenschaften der Zweiphasenströmung des Wärmeträgermediums beim Einspeichern von Wärmeenergie mit hoher Genauigkeit eingestellt werden können.

Diese Aufgabe wird durch eine Vorrichtung gemäß Anspruch 1 und ein Verfahren gemäß Anspruch 14 gelöst. Bevorzugte Ausführungen sind in den abhängigen Ansprüchen enthalten.

Zur Lösung dieser Aufgabe ist daher erfindungsgemäß vorgesehen, dass die Zuführeinrichtung eine Doppelrohrleitung mit einer das Wärmeträgermedium im dampfförmigen Zustand führenden Innenrohrleitung und mit einer das Wärmeträgermedium im flüssigen Zustand führenden Außenrohrleitung aufweist, und die Innenrohrleitung im Bereich einer Durchtrittsöffnung zwischen der Außenrohrleitung und der Wärmeträgerleitung eine Austrittsöffnung aufweist, wobei eine das Wärmeträgermedium im flüssigen und im dampfförmigen Zustand enthaltende Zweiphasenströmung in die Wärmeträgerleitung zuführbar ist.

Erfindungsgemäß wird daher das Wärmeträgermedium beim Beladen des Zwischenspeichers durch eine Doppelrohrleitung zugeführt, wobei in der Innenrohrleitung das Wärmeträgermedium im dampfförmigen Zustand und in der Außenrohrleitung das Wärmeträgermedium im flüssigen Zustand gefördert wird. Die Innenrohr- und die Außenrohrleitung sind dabei bevorzugt im Wesentlichen koaxial angeordnet. An der Austrittsöffnung der Innenrohrleitung wird das dampfförmige Wärmeträgermedium (insbesondere Wasserdampf) in das flüssige Wärmeträgermedium (insbesondere Wasser) eingebracht, so dass eine Zweiphasenströmung mit einem flüssigen und einem dampfförmigen Bestandteil ausgebildet wird. Als Wärmeträgermedium ist bevorzugt Wasser vorgesehen, welches in der Zweiphasenströmung im flüssigen und im dampfförmigen Zustand vorliegt. Diese Zweiphasenströmung wird in die Wärmeträgerleitung eingebracht, welche das Wärmespeichermedium, insbesondere ein Phasenwechselmaterial, durchsetzt. Beim Durchströmen der Wärmeträgerleitung wird der dampfförmige Bestandteil der Zweiphasenströmung im Wärmeaustausch mit dem Wärmespeichermedium zumindest teilweise, vorzugsweise vollständig, in den flüssigen Zustand überführt, so dass das Wärmeträgermedium in Strömungsrichtung nach der Wärmeträgerleitung bevorzugt vollständig im flüssigen Zustand vorliegt. Die erfindungsgemäße Ausführung zeichnet sich insbesondere dadurch aus, dass die Eigenschaften der Zweiphasenströmung beim Eintritt in die Wärmeträgerleitung mit hoher Genauigkeit eingestellt werden können. Als besonders günstig hat sich dabei herausgestellt, dass die Geschwindigkeit der Dampfkomponente über die Austrittsöffnung der Innenrohrleitung reguliert werden kann. Dies bringt insbesondere den Vorteil mit sich, dass die Druckstabilität entlang der Wärmeträgerleitung gewährleistet werden kann. Hierbei ist es insbesondere günstig, wenn der Innenrohrleitung zumindest ein Ventilelement zugeordnet ist, mit welchem die Dampfströmung durch die Innenrohrleitung einstellbar ist. Vorteilhafterweise können daher die Strömungsverhältnisse während des Wärmeaustauschs zwischen dem Wärmeträgermedium und dem Wärmspeichermedium präzise kontrolliert werden. Ein weiterer Vorteil der erfindungsgemäßen Ausführung besteht darin, dass an der Austrittsöffnung der Innenrohrleitung gezielt ein Schlupf, d.h. eine unterschiedliche Geschwindigkeit, zwischen der flüssigen und der dampfförmigen Komponente eingestellt werden kann. Besonders bevorzugt ist eine Ausführung, bei welcher eine Mehrzahl, insbesondere eine Vielzahl, von Wärmeträgerleitungen vorgesehen sind. Vorteilhafterweise kann die Mehrzahl bzw. Vielzahl von Wärmeträgerleitungen mittels der Doppelrohrleitung mit einer gleichförmigen Mischung von dampfförmigem und flüssigem Wärmeträgermedium versorgt werden.

Zur gezielten Einbringung der Zweiphasenströmung in die Wärmeträgerleitung ist die Austrittsöffnung an der Innenrohrleitung im Wesentlichen gegenüber der Durchtrittsöffnung zwischen der Außenrohrleitung und der Wärmeträgerleitung angeordnet. Besonders vorteilhaft ist es, wenn die Längsebene der Austrittsöffnung an der Innenrohrleitung im Wesentlichen parallel zur Längsebene der Durchtrittsöffnung zwischen der Außenrohrleitung und der Wärmeträgerleitung angeordnet ist. Dadurch können die Eigenschaften der Zweiphasenströmung beim Eintritt in die Wärmeträgerleitung präzise eingestellt werden.

Zur Erzielung eines Düseneffekts beim Austritt des dampfförmigen Wärmeträgermediums aus der Innenrohrleitung ist es von Vorteil, wenn die Austrittsöffnung der Innenrohrleitung einen geringeren Durchmesser als die Durchtrittsöffnung zwischen der Außenrohrleitung und der Wärmeträgerleitung aufweist.

Zur Durchmischung des dampfförmigen Wärmeträgermediums mit dem flüssigen Wärmeträgermedium ist es günstig, wenn die Austrittsöffnung an der Mantelfläche der Innenrohrleitung ausgebildet ist. Bei dieser Ausführung wird die Zweiphasenströmung des Wärmeträgermediums im vorzugsweise ringförmigen Zwischenraum zwischen der Innenrohrleitung und der Außenrohrleitung erzeugt.

Zur Einbringung des dampfförmigen Wärmeträgermediums in einem definierten, an der Durchtrittsöffnung ausgerichteten Strahl ist es vorteilhaft, wenn die Innenrohrleitung ein von der Mantelfläche der Innenrohrleitung abstehendes, im Querschnitt insbesondere kreisförmiges Austrittselement aufweist, welches am freien Ende die Austrittsöffnung aufweist. Das Austrittselement ist bevorzugt stutzenförmig ausgebildet. Um die Durchmischung des Wärmeträgermediums zu gewährleisten, weist das Austrittselement bevorzugt eine geringere Erstreckung senkrecht zur Mantelfläche der Innenrohrleitung als der Spalt zwischen der Innenrohrleitung und der Außenrohrleitung auf.

Zur Ausbildung mehrerer Durchmischungszonen des Wärmeträgermediums ist es günstig, wenn in Längsrichtung und/oder in Umfangsrichtung der Innenrohrleitung mehrere Austrittsöffnungen vorgesehen sind.

Hierbei ist es insbesondere vorteilhaft, wenn für jede Austrittsöffnung der Innenrohrleitung genau eine Wärmeträgerleitung vorgesehen ist. Demnach wird an jeder Austrittsöffnung der Innenrohrleitung eine Zweiphasenströmung des Wärmeträgermediums erzeugt, welche in die zugehörigen, bevorzugt gegenüber den Austrittsöffnungen angeordneten, Wärmeträgerleitungen eingebracht werden. Bevorzugt sind eine Vielzahl von Wärmeträgerleitungen vorgesehen, welche entlang des Zwischenspeichers jeweils von einem Wärmeverteilerkörper umschlossen sein können.

Zur Versorgung einer Vielzahl von Wärmeträgerleitungen in einer kompakten Anordnung innerhalb des Zwischenspeichers ist es günstig, wenn die Innenrohrleitung zumindest zwei in Längsrichtung verlaufende Reihen von Austrittsöffnungen aufweist, wobei die zwei Reihen von Austrittsöffnungen in Umfangsrichtung voneinander beabstandet sind. Demnach sind die Austrittsöffnungen der einen Reihe in einer ersten Winkelstellung am Umfang der Innenrohrleitung und die Austrittsöffnungen der anderen Reihe in einer zweiten Winkelstellung am Umfang der Innenrohrleitung angeordnet. Die Durchtrittsöffnungen in die Wärmeträgerleitungen sind dabei bevorzugt gegenüber den Austrittsöffnungen der Innenrohrleitung angeordnet.

Besonders bevorzugt ist eine Ausführung, bei welcher die Austrittsöffnungen der einen Reihe in Längsrichtung versetzt zu den Austrittsöffnungen der anderen Reihe angeordnet sind. Hiermit kann vorteilhafterweise eine Vielzahl von in Reihen mit Versatz zueinander angeordneten Wärmeträgerleitungen versorgt werden. Diese Ausführung ist insbesondere dann günstig, wenn die Wärmeverteilerkörper an den Wärmeträgerleitungen eine im Querschnitt polygonartige, insbesondere sechseckige, Außenkontur aufweisen, wobei die Wärmeträgerleitungen innerhalb des Gehäuses senkrecht zur Längserstreckung der Wärmeträgerleitungen zueinander versetzt angeordnet sind.

Gemäß einer bevorzugten Ausführung weisen die Wärmeträgerleitungen die Durchtrittsöffnungen aufweisende, in der Betriebsstellung zur Vertikalen geneigte Verbindungsabschnitte auf, deren Längsachsen vorzugsweise im Wesentlichen senkrecht zu den Längsebenen der zugehörigen Austrittsöffnungen an der Innenrohrleitung angeordnet sind. Die geneigten Verbindungsabschnitte sind mit Wärmeaustauschabschnitten verbunden, welche mit den das Wärmespeichermedium durchsetzenden Wärmeverteilerkörpern in Verbindung stehen. Die Wärmetauschabschnitte sind in der Betriebsstellung insbesondere senkrecht bzw. parallel zur Längsachse des Gehäuses angeordnet.

Gemäß einer alternativen bevorzugten Ausführung weist die Innenrohrleitung eine einzige Reihe von Austrittsöffnungen auf, welche bezogen auf die Betriebsstellung an der Oberseite der Innenrohrleitung angeordnet sind. Demnach versorgt die Doppelrohrleitung der Zuführeinrichtung bei dieser Ausführung genau eine Reihe von Wärmeträgerleitungen, welche vorzugsweise parallel zueinander in dem Gehäuse des Zwischenspeichers angeordnet sind.

Um den konstruktiven Aufwand für die Zuführung des Wärmeträgermediums zu verringern, ist es insbesondere vorteilhaft, wenn die Zuführeinrichtung mehrere vorzugsweise im Wesentlichen parallel angeordnete Doppelrohrleitungen aufweist, welche mit einer gemeinsamen Verteilerleitung verbunden sind. Die Verteilerleitung ist einerseits mit einer Zufuhr für das Wärmeträgermedium im dampfförmigen Zustand und andererseits mit einer Zufuhr für das Wärmeträgermedium im flüssigen Zustand verbunden. Gemäß einer bevorzugten Ausführung sind die Doppelrohrleitungen der Zuführeinrichtung in der Betriebsstellung unterhalb des Gehäuses des Zwischenspeichers angeordnet, wobei die Doppelrohrleitungen bevorzugt in derselben horizontalen Ebene vorgesehen sind. Beim Einspeichern der Wärmeenergie in das Wärmespeichermedium wird daher das Wärmeträgermedium in Aufwärtsströmung durch die Wärmeträgerleitungen geführt.

Gemäß einer bevorzugten Ausführung ist die zumindest eine Wärmeträgerleitung auf der von der Zuführeinrichtung abgewandten Seite mit einer Abführeinrichtung für das Wärmeträgermedium verbunden. Darüber hinaus ist es von Vorteil, wenn die Abführeinrichtung einen Sammelbehälter aufweist, in welchem das Wärmeträgermedium von mehreren Wärmeträgerleitungen gesammelt wird. Die Abführeinrichtung weist insbesondere auch eine Dampfableitung auf, mit welcher beim Ausspeicher- bzw. Entladevorgang das Wärmeträgermedium im dampfförmigen Zustand abgeleitet und einer weiteren Verwendung zugeführt wird.

Um das Wärmeträgermedium zumindest teilweise in einem geschlossenen Kreislauf zu führen, ist es von Vorteil, wenn die Abführeinrichtung eine Ableitung für das im flüssigen Zustand vorliegende Wärmeträgermedium aufweist, wobei die Ableitung mit der Außenrohrleitung der Zuführeinrichtung verbunden ist. Besonders bevorzugt ist dabei, wenn das im dampfförmigen Zustand zugeführte Wärmeträgermedium beim Durchströmen der Wärmeträgerleitung durch den Wärmeaustausch mit dem Wärmespeichermedium im Wesentlichen vollständig kondensiert, so dass das Wärmeträgermedium am Ausgang der Wärmeträgerleitung im Wesentlichen vollständig im flüssigen Zustand vorliegt. In diesem Fall kann das flüssige Wärmeträgermedium in die Zuführeinrichtung rezykliert werden. Vorteilhafterweise wird daher das flüssige Wärmeträgermedium im Umlauf geführt.

Um das flüssige Wärmeträgermedium im Betrieb im Zwangsumlauf zu führen, ist es günstig, wenn die Zuführeinrichtung mit einer Pumpvorrichtung, insbesondere einer Umwälzpumpe, verbunden ist.

Gemäß einer besonders bevorzugten Ausführung ist die Wärmeträgerleitung wärmeleitend mit einem zum Wärmeaustausch mit dem Wärmespeichermedium eingerichteten Wärmeverteilerkörper verbunden. Diese Ausführung eignet sich insbesondere zur Verwendung mit einem Wärmespeichermedium geringer Wärmeleitfähigkeit, beispielsweise mit einem Nitratsalz.

Zur effizienten Einspeicherung von Wärmeenergie in Wärmespeichermedien mit geringer Wärmeleitfähigkeit, wie beispielsweise Nitratsalze, ist bevorzugt vorgesehen, dass der Wärmeverteilerkörper ein wärmeleitend mit der Wärmeträgerleitung verbundenes Wärmeübertragungselement und mehrere von dem Wärmeübertragungselement nach außen abstehende Wärmeleitrippen aufweist.

Die erfindungsgemäße Vorrichtung kann alternativ mit einem Wärmespeichermedium mit hoher Wärmeleitfähigkeit, wie beispielsweise einer Metalllegierung, verwendet werden, wobei in solchen Anwendungen gegebenenfalls auf den Wärmeverteilerkörper verzichtet werden könnte.

Zur Erhöhung der Oberfläche des Wärmeverteilerkörpers ist es günstig, wenn zumindest eine Wärmeleitrippe zumindest eine Verzweigung aufweist, wobei vorzugsweise zumindest eine Verzweigung selbst eine Abzweigung aufweist. Durch die Verzweigungen und Abzweigungen kann das Wärmespeichermedium gleichmäßig durchsetzt werden. Zu diesem Zweck ist es vorteilhaft, wenn die Wärmeleitrippen sternförmig von dem Wärmeübertragungselement abstehen. Dabei können die Verzweigungen und Abzweigungen so angeordnet sein, dass der Abstand zwischen benachbarten Wärmeaustauschflächen an den Wärmeleitrippen, Verzweigungen und Abzweigungen im Wesentlichen konstant ist.

Besonders bevorzugt ist es, wenn der Wärmeverteilerkörper einteilig mit dem Wärmeübertragungselement verbunden ist, wobei der Wärmeverteilerkörper und das Wärmeübertragungselement bevorzugt durch ein Strangpressprofil gebildet sind. Diese Ausführung zeichnet sich durch geringe Herstellungskosten aus. Zudem können die Wärmeleitrippen auf einfache Weise so ausgebildet werden, dass sie das Wärmespeichermedium gleichmäßig durchsetzen. Dadurch wird ein effizienter Wärmeübergang zwischen dem Wärmeübertragungselement und den Wärmeleitrippen erzielt.

Zur Erzielung eines druckstabilen Wärmetauschers mit hohem Wirkungsgrad des Wärmeübergangs ist es günstig, wenn das Wärmeübertragungselement aus einem ersten Metall, insbesondere Aluminium, und die Wärmeträgerleitung aus einem zweiten Metall, insbesondere Stahl, hergestellt ist.

Die der Erfindung zugrundeliegende Aufgabe wird zudem durch ein Verfahren der eingangs angeführten Art gelöst, bei welchem eine Strömung des Wärmeträgermediums im dampfförmigen Zustand durch eine Innenrohrleitung und eine Strömung des Wärmeträgermediums im flüssigen Zustand durch eine Außenrohrleitung einer Doppelrohrleitung geführt wird, bevor die Strömung des Wärmeträgermediums im dampfförmigen Zustand mit der Strömung des Wärmeträgermediums im flüssigen Zustand zusammengeführt wird, wodurch eine das Wärmeträgermedium im flüssigen und im dampfförmigen Zustand enthaltende Zweiphasenströmung erzeugt wird, welche in die Wärmeträgerleitung eingeleitet wird.

Hinsichtlich der Vorteile und technischen Effekte eines solchen Verfahrens wird zwecks Vermeidung von Wiederholungen auf die vorstehenden Ausführungen verwiesen.

Dabei ist bevorzugt vorgesehen, dass die Wärmeenergie des Wärmeträgermediums über einen mit der Wärmeträgerleitung verbundenen Wärmeverteilerkörper an das Wärmespeichermedium abgegeben wird.

Die Erfindung wird anhand der in den Zeichnungen dargestellten Ausführungsbeispiele noch weiter erläutert. In den Zeichnungen zeigen:
Fig. 1 schematisch einen erfindungsgemäßen Latentwärmespeicher, welchem über eine Doppelrohrleitung eine Zweiphasenströmung eines Wärmeträgermediums zugeführt wird;
Fig. 2 einen Vertikalschnitt durch den Latentwärmespeicher gemäß Fig. 1, wobei eine Reihe von den Latentwärmespeicher durchsetzenden Wärmeträgerleitungen ersichtlich sind, die von der Doppelrohrleitung versorgt werden;
Fig. 3 einen Querschnitt durch den Latentwärmespeicher gemäß Fig. 1 und 2, wobei zwei außenliegende Verteilerleitungen ersichtlich sind, welche jeweils mit einer Anordnung von parallelen Doppelrohrleitungen an der Unterseite des Latentwärmespeichers verbunden sind;
Fig. 4 eine geschnittene Detailansicht des Latentwärmespeichers im Bereich einer Außenwand des Gehäuses, welche von den Doppelrohrleitungen für die Zuführung des Wärmeträgermediums durchdrungen wird;
Fig. 5 eine Schnittansicht einer der Doppelrohrleitungen im Bereich von Durchtrittsöffnungen der Wärmeträgerleitungen gemäß einer ersten bevorzugten Ausführungsform, wobei eine Innenrohrleitung für das Wärmeträgermedium im gasförmigen Zustand und eine Außenrohrleitung für das Wärmeträgermedium im flüssigen Zustand ersichtlich sind und diese Doppelrohrleitungen jeweils mit zwei Reihen von Wärmeträgerleitungen verbunden sind;
Fig. 6 eine Schnittansicht einer Doppelrohrleitung gemäß einer weiteren bevorzugten Ausführungsform, wobei an die Oberseite der Doppelrohrleitung eine einzelne Reihe von Wärmeträgerleitungen angeschlossen ist;
Fig. 7 eine Schnittansicht der Doppelrohrleitung gemäß einer weiteren bevorzugten Ausführungsform, wobei an die Doppelrohrleitung drei Reihen von Wärmeträgerleitungen angeschlossen sind;
Fig. 8 eine Schnittansicht der Doppelrohrleitung im Bereich der Verbindung zwischen der Verteilerleitung und der Doppelrohrleitung;
Fig. 9 eine schaubildliche Ansicht eines Wärmetauschers, welcher aus der die Zweiphasenströmung führenden Wärmeträgerleitung und einem diese umschließenden Wärmeverteilerkörper besteht; und
Fig. 10 eine Wärmespeicheranordnung bestehend aus einer Vielzahl von in Fig. 9 gezeigten Wärmespeichern zur Anordnung in dem Latentwärmespeicher.

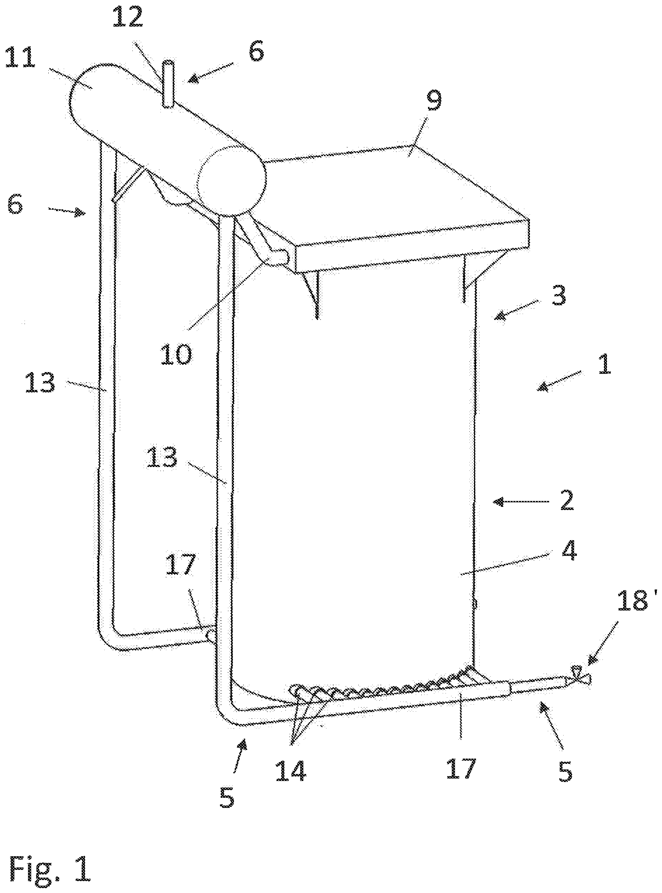

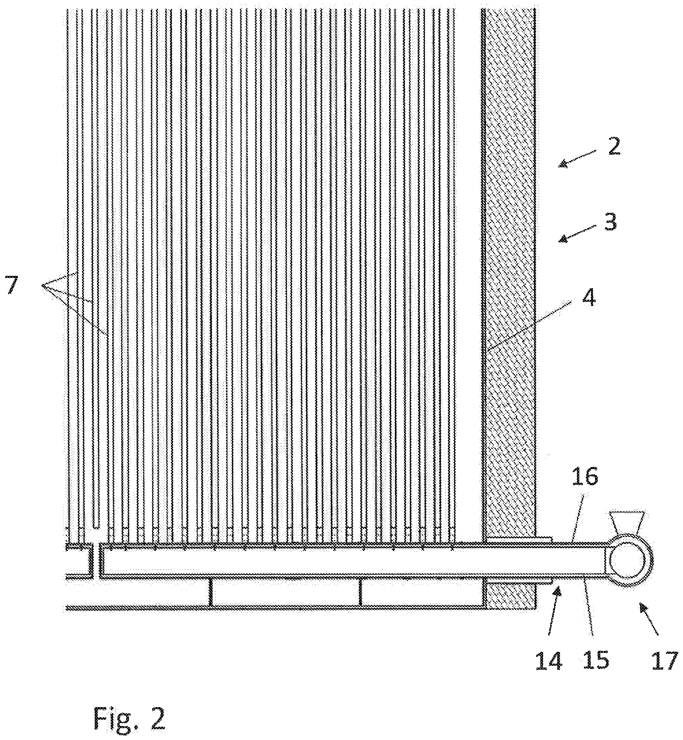

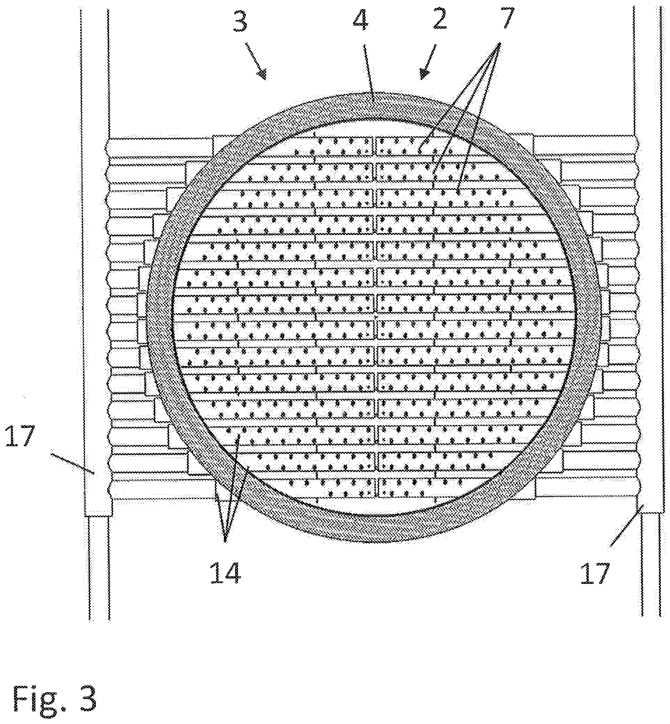

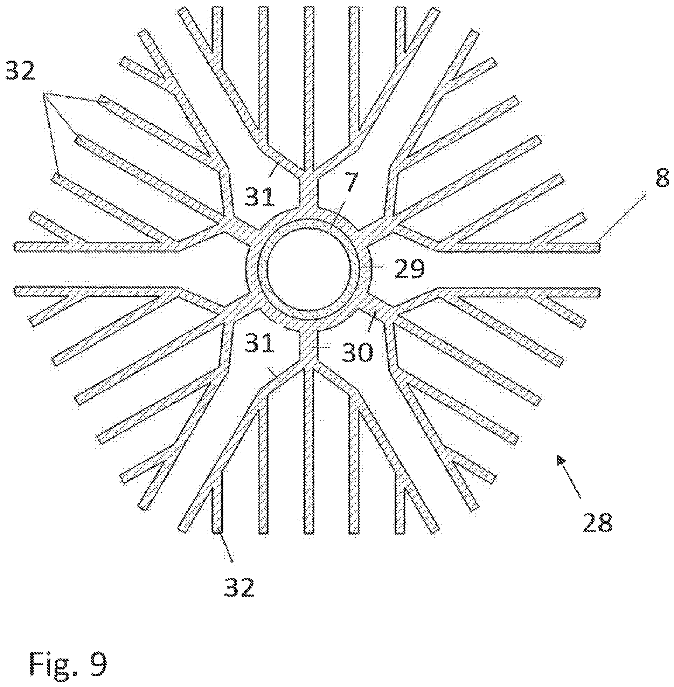

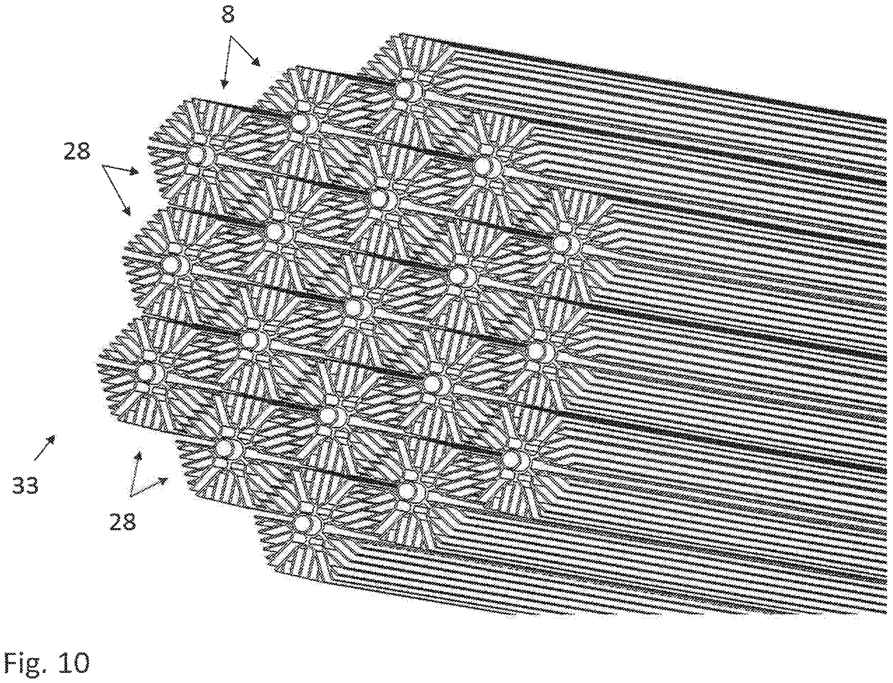

Fig. 1 zeigt eine Vorrichtung 1 zum Zwischenspeichern thermischer Energie, wobei die Vorrichtung 1 in der gezeigten Ausführung als Latentwärmespeicher 2 ausgeführt ist. Der Latentwärmespeicher 2 weist ein Gehäuse 3 mit einer gedämmten Außenwand 4 auf, wobei in dem Gehäuse 3 ein Wärmespeichermedium aufgenommen ist. Als Wärmespeichermedium ist in der gezeigten Ausführung ein Phasenwechselmaterial ("Phase Change Material", PCM) vorgesehen, wobei im Stand der Technik verschiedenste solche Phasenwechselmaterialien, beispielsweise Nitratsalze, bekannt sind. Der Latentwärmespeicher 2 weist eine Zuführeinrichtung 5, mit welcher ein Wärmeträgermedium zugeführt wird, und eine Abführeinrichtung 6, mit welcher das Wärmeträgermedium abgeführt wird, auf. Das Wärmeträgermedium wird innerhalb des Gehäuses 3 durch Wärmeträgerleitungen 7 (vgl. Fig. 2, 3) geführt, welche das Wärmespeichermedium in vertikaler Richtung durchsetzen. Wie nachstehend noch weiter erläutert wird, liegt das Wärmeträgermedium innerhalb der Wärmeträgerleitungen 7 in einer Zweiphasenströmung vor, welche eine flüssige Komponente und eine dampfförmige Komponente aufweist. Die Wärmeträgerleitungen 7 sind mit Wärmeverteilerkörpern 8 (vgl. Fig. 9, 10) verbunden, welche zum Wärmeaustausch mit dem Wärmespeichermedium eingerichtet sind.

Beim Beladen des Latentwärmespeichers wird Wärmeenergie in das Wärmespeichermedium eingespeichert und beim Entladen des Latentwärmespeichers 2 wird Wärmeenergie aus dem Wärmespeichermedium ausgespeichert, wobei die Latentwärme des Phasenübergangs des Phasenwechselmaterials genutzt wird. Zur Einleitung des Einspeichervorgangs wird der Druck der Zweiphasenströmung angehoben, so dass die Sattdampftemperatur die Schmelztemperatur des Salzes übersteigt. Somit wird Wärme von dem Wärmeträgermedium auf das Phasenwechselmaterial übertragen. Auf der Wasser/Dampf-Seite findet hingegen ein Kondensationsprozess statt. Zum Ausspeichern von Wärmeenergie wird andererseits der Druck des Wasser-DampfGemisches derart gesenkt, dass die Sattdampftemperatur geringer als die Schmelztemperatur des Phasenwechselmaterials ist. Dadurch wird Wärme von dem Phasenwechselmaterial auf das Wärmeträgermedium übertragen, wobei das Salz des Phasenwechselmaterials erstarrt.

Wie aus Fig. 1 weiters ersichtlich, weist die Trenn- und Abführeinrichtung 6 zudem einen Sammlerkasten 9 auf, in welchem sich Sammler befinden, in denen das Wärmeträgermedium nach dem Passieren der Wärmeträgerleitungen 7 zu einer geringeren Zahl von Leitungen zusammengefasst und dann in Richtung einer Trommel 11 geleitet wird. Der Sammlerkasten 9 ist über Leitungen 10 mit einer Trommel 11 verbunden, welche an der Oberseite eine Abführung 12 zum Abführen des Wärmeträgermediums im dampfförmigen Zustand aufweist. Darüber hinaus weist die Trommel 11 an der Unterseite Ableitungen 13 auf, mit welchen das Wärmeträgermedium im flüssigen Zustand in die Zuführeinrichtung 5 rezykliert wird.

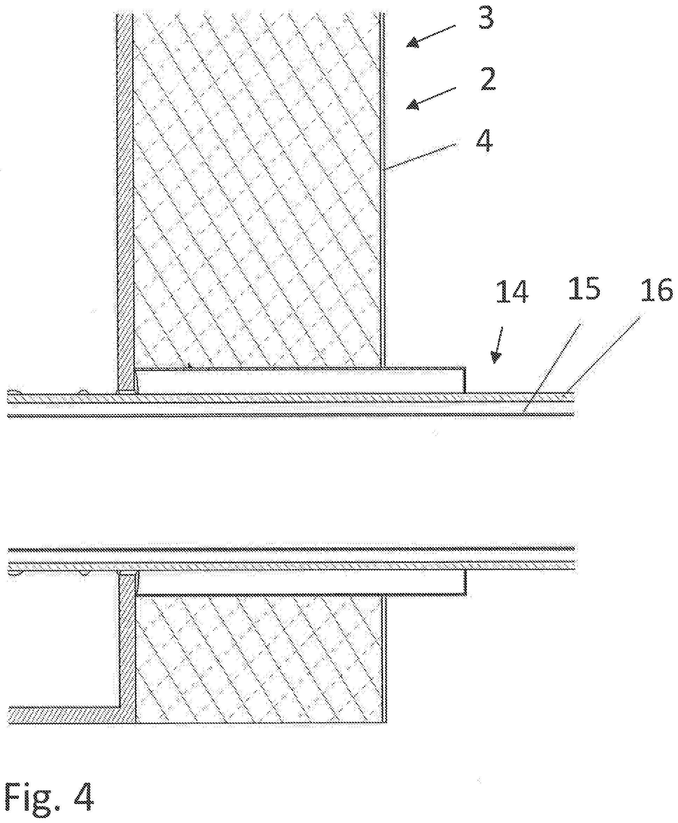

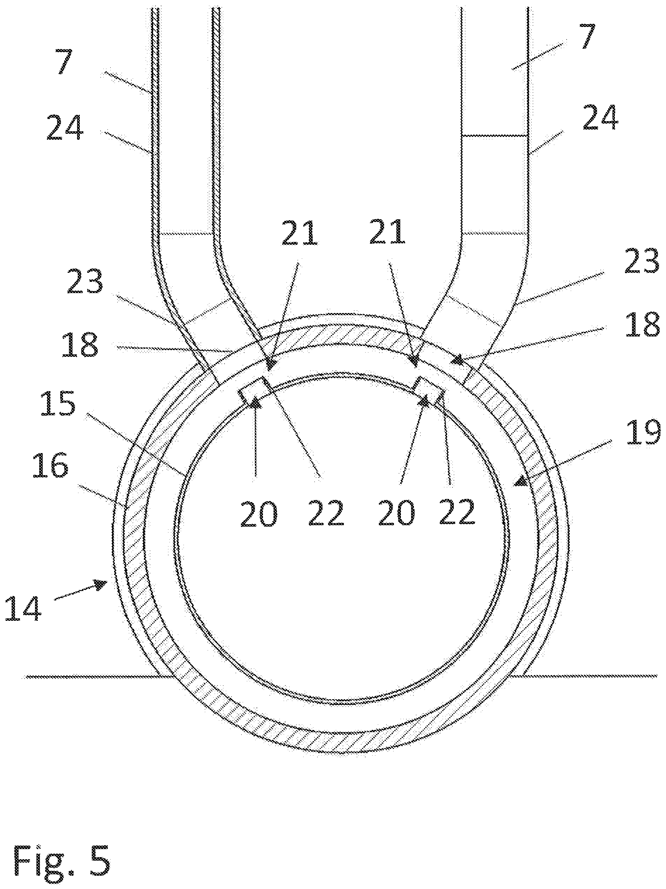

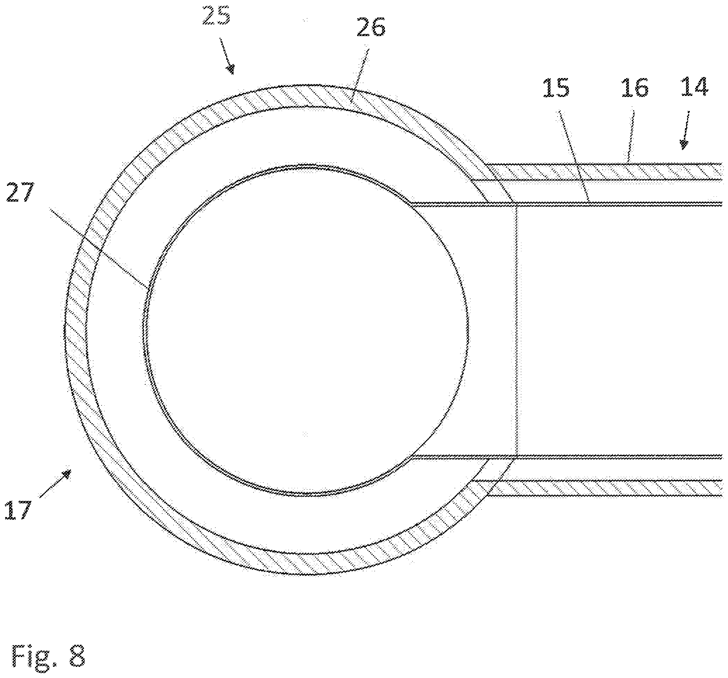

Wie aus Fig. 2 bis 4 ersichtlich, weist die Zuführeinrichtung 5 in der gezeigten Ausführung mehrere Doppelrohrleitungen 14 auf, welche durch eine das Wärmeträgermedium im dampfförmigen Zustand führende Innenrohrleitung 15 und eine das Wärmeträgermedium im flüssigen Zustand führende Außenrohrleitung 16 (vgl. insbesondere auch Fig. 5 bis 7) gebildet sind. Die Doppelrohrleitungen 14 sind in paralleler Anordnung am unteren Ende des Gehäuses 3 vorgesehen. In der gezeigten Ausführung sind zwei Reihen von Doppelrohrleitungen 14 vorgesehen, welche jeweils von einer gemeinsamen Verteilerleitung 17 versorgt werden. Die Verteilerleitung 17 ist über ein Ventilelement 18' (s. Fig. 1) mit einer (nicht gezeigten) Dampfzufuhr verbunden, mit welcher ein vorgegebener Dampfstrom zunächst in die Verteilerleitung 17 und von dort in die Doppelrohrleitungen 16 eingebracht wird. Das Wärmeträgermedium im flüssigen Zustand wird über die Ableitungen 13 in die Verteilerleitungen 17 eingebracht, welche wie die Doppelrohrleitungen 14 als Doppelrohre 25 ausgebildet sind (vgl. auch Fig. 8) .

Wie aus Fig. 5 ersichtlich, sind die Wärmeträgerleitungen 7 über Durchtrittsöffnungen 18 mit dem ringförmigen Zwischenraum 19 zwischen der Außenrohrleitung 16 und der Innenrohrleitung 15 der Doppelrohrleitung 14 verbunden. Die Innenrohrleitung 15 weist gegenüber den Durchtrittsöffnungen 18 jeweils eine Austrittsöffnung 20 auf, mit welcher das dampfförmige Wärmeträgermedium aus der Innenrohrleitung 15 in Mischzonen 21 des Zwischenraums 19 zwischen der Innenrohrleitung 15 und der Außenrohrleitung 16 eingebracht wird. In den Mischzonen 21 wird das aus den Austrittsöffnungen 20 austretende, dampfförmige Wärmeträgermedium mit dem in dem Zwischenraum 19 geführten, flüssigen Wärmeträgermedium zusammengeführt, wodurch eine das Wärmeträgermedium im flüssigen und im dampfförmigen Zustand enthaltende Zweiphasenströmung erzeugt wird. Diese Zweiphasenströmung wird in die Wärmeträgerleitungen 7 eingebracht. Beim Durchströmen der Wärmeträgerleitungen 7 gibt die Zweiphasenströmung über die Wärmeverteilerkörper 8 Wärmenergie an das Wärmespeichermedium ab. Dadurch kondensiert der dampfförmige Bestandteil der Zweiphasenströmung, so dass das Wärmeträgermedium in Strömungsrichtung nach der Wärmeträgerleitungen vorzugsweise vollständig im flüssigen Zustand vorliegt.

Wie aus Fig. 5 weiters ersichtlich, weist die umfangseitige Austrittsöffnung 20 der Innenrohrleitung 15 einen geringeren Durchmesser (Strömungsquerschnitt) als die Durchtrittsöffnung 18 zwischen der Außenrohrleitung 16 und der Wärmeträgerleitung 7 auf. In der gezeigten Ausführung weist die Innenrohrleitung 15 mehrere von der Mantelfläche der Innenrohrleitung 15 abstehende Austrittselemente 22 auf, welche sich in die Mischzonen 21 im Zwischenraum 19 zwischen der Innenrohrleitung 15 und der Außenrohrleitung 16 erstrecken. Die Austrittselemente 22 bilden an den freien Enden die Austrittsöffnungen 20. In der gezeigten Ausführung sind die Austrittselemente 22 stutzenförmig, insbesondere mit einem kreisförmigen Querschnitt, ausgebildet.

In den Ausführungen der Fig. 5 bis 7 weisen die Innenrohrleitungen 15 eine Vielzahl von Austrittsöffnungen 20 auf, wobei für jede Austrittsöffnung 20 der Innenrohrleitung 15 genau eine Wärmeträgerleitung 7 vorgesehen ist.

Gemäß Fig. 5 weist die Innenrohrleitung 15 genau zwei in Längsrichtung verlaufende Reihen von Austrittsöffnungen 20 auf, wobei die zwei Reihen von Austrittsöffnungen 20 in Umfangsrichtung voneinander beabstandet sind. Dadurch sind in der Schnittansicht der Fig. 5 genau zwei Austrittsöffnungen 20 zu sehen. Die Austrittsöffnungen 20 der einen Reihe sind dabei in Längsrichtung versetzt zu den Austrittsöffnungen 20 der anderen Reihe angeordnet. Diese Ausführung ist in besonders vorteilhafter Weise mit der Ausgestaltung der Wärmeverteilerkörper 8 gemäß Fig. 9 kombinierbar, welche bei dieser Ausführung eine im Querschnitt sechseckige Außenkontur aufweisen, so dass sich eine wabenförmige Struktur der Anordnung von Wärmeverteilerkörpern 8 ergibt. Bei dieser Ausführung ist zudem vorgesehen, dass die Wärmeträgerleitungen 7 in der gezeigten Betriebsstellung zur Vertikalen geneigte (abgebogene) Verbindungsabschnitte 23 aufweisen, welche in die Durchtrittsöffnungen 18 münden. Die Längsachsen der Verbindungsabschnitte 23 sind im Wesentlichen senkrecht zu den Längsebenen der zugehörigen Austrittsöffnungen 20 an der Innenrohrleitung 15 angeordnet. Die Verbindungsabschnitte 23 sind mit vertikalen Wärmetauschabschnitten 24 verbunden, welche das Gehäuse 3 des Latentwärmespeichers 2 in vertikaler Richtung durchsetzen.

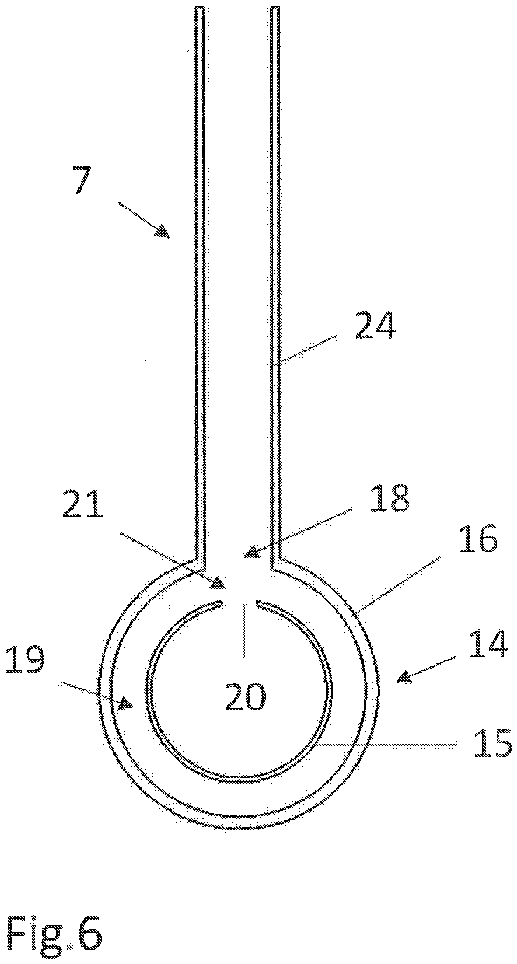

Gemäß Fig. 6 weist die Innenrohrleitung 15 eine einzige Reihe von Austrittsöffnungen 20 auf, welche bezogen auf die Betriebsstellung an der Oberseite der Innenrohrleitung 15 angeordnet sind. Bei dieser Ausführung sind die Austrittsöffnungen 20 unmittelbar an der Mantelfläche der Innenrohrleitung 15 ausgebildet. Die Innenrohrleitung 15 versorgt über die Austrittsöffnungen 20 eine entsprechende Anzahl von Wärmeträgerleitungen 7, welche bei dieser Ausführung bis zu der Doppelrohrleitung 14 in vertikaler Richtung verläuft. Das Außenrohr 16 der Doppelrohrleitung 14 ist in der gezeigten Ausführung einteilig mit den Wärmeträgerleitungen 7 gebildet.

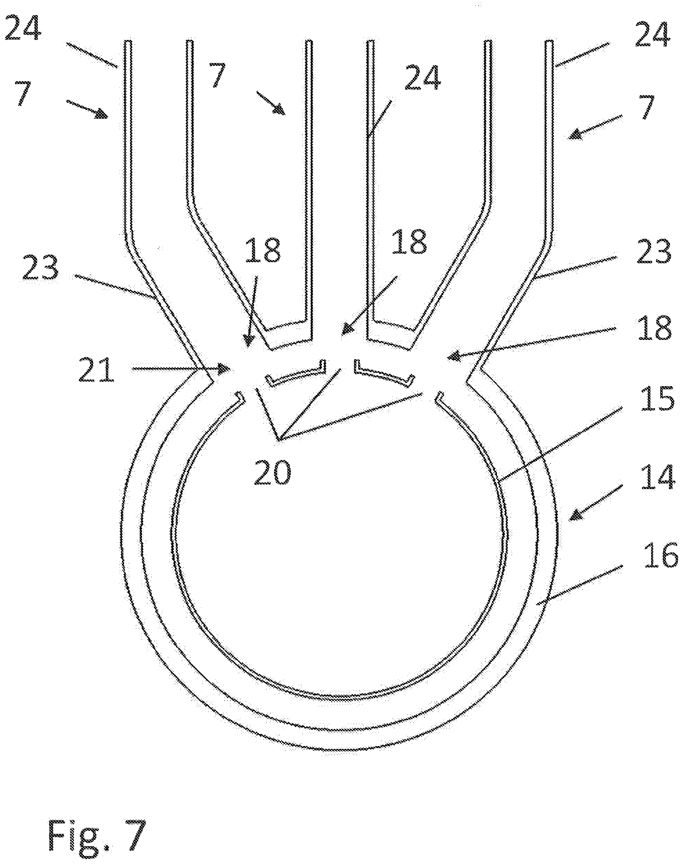

Gemäß Fig. 7 weist die Innenrohrleitung 15 drei Reihen von Austrittsöffnungen 20 auf, wobei eine mittlere Reihe bezogen auf die Betriebsstellung an der Oberseite der Innenrohrleitung 15 angeordnet ist und die zwei äußeren Reihen in unterschiedlichen Winkelstellungen am Umfang der Doppelrohrleitung 14 angeordnet sind. Wie bei den Ausführungsvarianten der Fig. 5 und 6 ist eine den Austrittsöffnungen 20 entsprechende Anzahl von Wärmeträgerleitungen 7 vorgesehen, wobei die Durchtrittsöffnungen 18 gegenüber den Austrittsöffnungen 20 der Innenrohrleitungen 15 angeordnet sind. Die äußeren Wärmeträgerleitungen 7 weisen dabei die zur Vertikalen geneigten Verbindungsabschnitte 23 auf; die mittleren Wärmeträgerleitungen 7 sind vertikal angeordnet.

Wie aus Fig. 8 ersichtlich, ist die Verteilerleitung 17 zumindest im Bereich der Doppelrohrleitungen 14 als Doppelrohr 25 ausgebildet, welches ein Außenrohr 26 für das flüssige Wärmeträgermedium und ein Innenrohr 27 für das dampfförmige Wärmeträgermedium aufweist. Das Außenrohr 26 ist dabei mit der Außenrohrleitung 16 und das Innenrohr 27 mit der Innenrohrleitung 15 verbunden.

Fig. 9 zeigt ein Wärmetauscherelement 28, welches die Wärmeträgerleitung 7 und den Wärmeverteilerkörper 8 aufweist. Das Wärmetauscherelement 28 weist eine langgestreckte Form mit einer Länge von insbesondere zwischen 2 und 20 Metern auf. Der Wärmeverteilerkörper 8 ist wärmeleitend mit der Wärmeträgerleitung 7 verbunden. Dafür weist der Wärmeverteilerkörper 8 ein rohrförmiges Wärmeübertragungselement 29 auf, welches die Wärmeträgerleitung 7 umschließt. Der Wärmeverteilerkörper 8 weist zudem Wärmeleitrippen 30 auf, welche von dem Wärmeübertragungselement 29 radial nach außen abstehen. Die Wärmeleitrippen 30 weisen Verzweigungen 31 auf, welche teilweise in Abzweigungen 32 aufgespalten sind.

Wie aus Fig. 9 weiters ersichtlich, sind die Wärmeleitrippen 30, die Verzweigungen 31 und die Abzweigungen 32 des Wärmeverteilerkörpers 8 in einer Weise angeordnet, dass das Phasenwechselmaterial des Latentwärmespeichers 2 möglichst gleichmäßig durchsetzt wird. Zu diesem Zweck sind die Abzweigungen 31 in der Art von gruppenweise parallelen Stegen parallel zueinander angeordnet.

Wie aus Fig. 9 weiters ersichtlich, sind der Wärmeverteilerkörper 8 und das Wärmeübertragungselement 29 einteilig bzw. einstückig als Strangpressprofil ausgebildet. Das Strangpressprofil ist aus einem Material mit hoher thermischer Leitfähigkeit gefertigt, wobei insbesondere eine Ausführung aus Aluminium vorgesehen sein kann. Demgegenüber ist die Wärmeträgerleitung 7 aus einem Material mit einer niedrigeren thermischen Leitfähigkeit, aber einer höheren Festigkeit, insbesondere aus Stahl, hergestellt.

Fig. 10 zeigt eine Wärmespeicheranordnung 33 mit einer Vielzahl von Wärme-Verteilkörpern 8, welche im Innenraum des Latentwärmespeichers 2 anordenbar ist. Aufgrund der dichten Anordnung der so gebildeten Teil-Wärmespeicher (vgl. die im Querschnitt sechseckige Kontur der Wärmeverteilerkörper 8) kann hiermit das Phasenwechselmaterial des Latentwärmespeichers 2 gleichmäßig durchsetzt werden.

## Patentansprüche

1. Vorrichtung (1) zum Zwischenspeichern thermischer Energie, mit einem Gehäuse (3) zur Aufnahme eines Wärmespeichermediums, insbesondere eines Phasenwechselmaterials, mit zumindest einer in dem Gehäuse (3) angeordneten Wärmeträgerleitung (7), welche mit einer Zuführeinrichtung (5) zum Zuführen eines Wärmeträgermediums in einem Wärmeeinspeichervorgang verbunden ist, wobei die Zuführeinrichtung (5) eine Doppelrohrleitung (14) mit einer das Wärmeträgermedium im dampfförmigen Zustand führenden Innenrohrleitung (15) und mit einer das Wärmeträgermedium im flüssigen Zustand führenden Außenrohrleitung (16) aufweist, und die Innenrohrleitung (15) im Bereich einer Durchtrittsöffnung (18) zwischen der Außenrohrleitung (16) und der Wärmeträgerleitung (7) eine Austrittsöffnung (20) aufweist, wobei eine das Wärmeträgermedium im flüssigen und im dampfförmigen Zustand enthaltende Zweiphasenströmung in die Wärmeträgerleitung (7) zuführbar ist, **dadurch gekennzeichnet, dass** die Austrittsöffnung (20) an der Innenrohrleitung (15) im Wesentlichen gegenüber der Durchtrittsöffnung (18) zwischen der Außenrohrleitung (16) und der Wärmeträgerleitung (7) angeordnet ist.

2. Vorrichtung nach Anspruch 1, **dadurch gekennzeichnet, dass** die Austrittsöffnung (20) der Innenrohrleitung (15) einen geringeren Durchmesser als die Durchtrittsöffnung (18) zwischen der Außenrohrleitung (16) und der Wärmeträgerleitung (7) aufweist.

3. Vorrichtung nach nach Anspruch 1 oder 2, **dadurch gekennzeichnet, dass** die Austrittsöffnung (20) an der Mantelfläche der Innenrohrleitung (15) ausgebildet ist.

4. Vorrichtung nach einem der Ansprüche 1 bis 3, **dadurch gekennzeichnet, dass** die Innenrohrleitung (15) ein von der Mantelfläche der Innenrohrleitung (15) abstehendes, im Querschnitt insbesondere kreisförmiges Austrittselement (22) aufweist, welches am freien Ende die Austrittsöffnung (20) aufweist.

5. Vorrichtung nach einem der Ansprüche 1 bis 4, **dadurch gekennzeichnet, dass** in Längsrichtung und/oder in Umfangsrichtung der Innenrohrleitung mehrere Austrittsöffnungen (20) vorgesehen sind, wobei für jede Austrittsöffnung (20) der Innenrohrleitung (15) vorzugsweise genau eine Wärmeträgerleitung (7) vorgesehen ist.

6. Vorrichtung nach Anspruch 5, **dadurch gekennzeichnet, dass** die Innenrohrleitung (15) zumindest zwei in Längsrichtung verlaufende Reihen von Austrittsöffnungen (20) aufweist, wobei die zwei Reihen von Austrittsöffnungen (20) in Umfangsrichtung voneinander beabstandet sind, wobei die Austrittsöffnungen (10) der einen Reihe in Längsrichtung bevorzugt versetzt zu den Austrittsöffnungen (20) der anderen Reihe angeordnet sind.

7. Vorrichtung nach Anspruch 6, **dadurch gekennzeichnet, dass** die Wärmeträgerleitungen (7) die Durchtrittsöffnungen (18) aufweisende, in der Betriebsstellung zur Vertikalen geneigte Verbindungsabschnitte (23) aufweisen, deren Längsachsen vorzugsweise im Wesentlichen senkrecht zu den Längsebenen der zugehörigen Austrittsöffnungen (20) an der Innenrohrleitung (15) angeordnet sind.

8. Vorrichtung nach Anspruch 5, **dadurch gekennzeichnet, dass** die Innenrohrleitung (15) eine einzige Reihe von Austrittsöffnungen (20) aufweist, welche bezogen auf die Betriebsstellung an der Oberseite der Innenrohrleitung (15) angeordnet sind.

9. Vorrichtung nach einem der Ansprüche 1 bis 8, **dadurch gekennzeichnet, dass** die Zuführeinrichtung (5) mehrere vorzugsweise im Wesentlichen parallel angeordnete Doppelrohrleitungen (15) aufweist, welche mit einer gemeinsamen Verteilerleitung (17) verbunden sind.

10. Vorrichtung nach einem der Ansprüche 1 bis 9, **dadurch gekennzeichnet, dass** die zumindest eine Wärmeträgerleitung (7) auf der von der Zuführeinrichtung (5) abgewandten Seite mit einer Abführeinrichtung (6) für das Wärmeträgermedium verbunden ist, wobei vorzugsweise die Abführeinrichtung (6) eine Ableitung (13) für das im flüssigen Zustand vorliegende Wärmeträgermedium aufweist, wobei die Ableitung (13) mit der Außenrohrleitung (16) der Zuführeinrichtung (5) verbunden ist.

11. Vorrichtung nach einem der Ansprüche 1 bis 10, **dadurch gekennzeichnet, dass** die Zuführeinrichtung (5) mit einer Pumpvorrichtung, insbesondere einer Umwälzpumpe, verbunden ist.

12. Vorrichtung nach einem der Ansprüche 1 bis 11, **dadurch gekennzeichnet, dass** die Wärmeträgerleitung (7) wärmeleitend mit einem zum Wärmeaustausch mit dem Wärmespeichermedium eingerichteten Wärmeverteilerkörper (8) verbunden ist, wobei der Wärmeverteilerkörper (8) vorzugsweise ein wärmeleitend mit der Wärmeträgerleitung (7) verbundenes Wärmeübertragungselement (29) und mehrere von dem Wärmeübertragungselement (29) nach außen abstehende Wärmeleitrippen (30) aufweist, wobei vorzugsweise zumindest eine Wärmeleitrippe (30) zumindest eine Verzweigung (31) aufweist, wobei vorzugsweise zumindest eine Verzweigung (31) selbst eine Abzweigung (32) aufweist, wobei der Wärmeverteilerkörper (8) vorzugsweise einteilig mit dem Wärmeübertragungselement (29) verbunden ist, wobei der Wärmeverteilerkörper (8) und das Wärmeübertragungselement (29) bevorzugt durch ein Strangpressprofil gebildet sind.

13. Vorrichtung nach Anspruch 12, **dadurch gekennzeichnet, dass** das Wärmeübertragungselement (29) aus einem ersten Metall, insbesondere Aluminium, und die Wärmeträgerleitung (7) aus einem zweiten Metall, insbesondere Stahl, hergestellt ist.

14. Verfahren zum Zwischenspeichern thermischer Energie unter Verwendung einer Vorrichtung nach Anspruch 1, wobei ein Wärmeträgermedium durch die Wärmeträgerleitung (7) geführt wird, wobei Wärmeenergie des Wärmeträgermediums an ein Wärmespeichermedium, insbesondere an ein Phasenwechselmaterial, abgegeben wird, wobei eine Strömung des Wärmeträgermediums im dampfförmigen Zustand durch die Innenrohrleitung (15) und eine Strömung des Wärmeträgermediums im flüssigen Zustand durch die Außenrohrleitung (16) der Doppelrohrleitung (14) geführt wird, bevor die Strömung des Wärmeträgermediums im dampfförmigen Zustand mit der Strömung des Wärmeträgermediums im flüssigen Zustand zusammengeführt wird, wodurch eine das Wärmeträgermedium im flüssigen und im dampfförmigen Zustand enthaltende Zweiphasenströmung erzeugt wird, welche in die Wärmeträgerleitung (7) eingeleitet wird.

15. Verfahren nach Anspruch 14, **dadurch gekennzeichnet, dass** die Wärmeenergie des Wärmeträgermediums über einen mit der Wärmeträgerleitung (7) verbundenen Wärmeverteilerkörper (8) an das Wärmespeichermedium abgegeben wird.

## Claims

1. Device (1) for the intermediate storage of thermal energy, comprising a housing (3) for receiving a heat accumulating medium, in particular a phase-change material, and at least one heat carrier line (7) that is arranged in the housing (3) and connected to a feed-in apparatus (5) for feeding in a heat carrier medium during a heat accumulating process, the feed-in apparatus (5) comprising a double pipe (14) which has an inner pipe (15) that guides the heat carrier medium in the vapour state and an outer pipe (16) that guides the heat carrier medium in the liquid state, and the inner pipe (15) comprising an outlet opening (20) in the region of a passage opening (18) between the outer pipe (16) and the heat carrier line (7), it being possible to feed a two-phase flow that contains the heat carrier medium in the liquid and the vapour state into the heat carrier line (7), **characterised in that** the outlet opening (20) is arranged in the inner pipe (15) so as to be substantially opposite the passage opening (18) between the outer pipe (16) and the heat carrier line (7).

2. Device according to claim 1, **characterised in that** the outlet opening (20) in the inner pipe (15) has a smaller diameter than the passage opening (18) between the outer pipe (16) and the heat carrier line (7).

3. Device according to either claim 1 or claim 2, **characterised in that** the outlet opening (20) is formed in the lateral face of the inner pipe (15).

4. Device according to any of claims 1 to 3, **characterised in that** the inner pipe (15) comprises an outlet element (22) that protrudes from the lateral face of the inner pipe (15), has an in particular circular cross section and comprises the outlet opening (20) in the free end thereof.

5. Device according to any of claims 1 to 4, **characterised in that** a plurality of outlet openings (20) is provided in the longitudinal direction and/or in the peripheral direction of the inner pipe, precisely one heat carrier line (7) preferably being provided for each outlet opening (20) in the inner pipe (15).

6. Device according to claim 5, **characterised in that** the inner pipe (15) comprises at least two rows of outlet openings (20) extending in the longitudinal direction, the two rows of outlet openings (20) being mutually spaced in the peripheral direction, the outlet openings (10) in one of the rows preferably being offset in the longitudinal direction from the outlet openings (20) in the other row.

7. Device according to claim 6, **characterised in that** the heat carrier lines (7) comprise connection portions (23) which comprise the passage openings (18) and are inclined towards the vertical in the operating position, the longitudinal axes of which connection portions are preferably arranged substantially perpendicular to the longitudinal planes of the associated outlet openings (20) in the inner pipe (15).

8. Device according to claim 5, **characterised in that** the inner pipe (15) comprises a single row of outlet openings (20) which are arranged in the upper side of the inner pipe (15) based on the operating position.

9. Device according to any of claims 1 to 8, **characterised in that** the feed-in apparatus (5) comprises a plurality of double pipes (15) that are preferably arranged so as to be substantially parallel and are connected to a common distribution line (17).

10. Device according to any of claims 1 to 9, **characterised in that** the end of the at least one heat carrier line (7) that is remote from the feed-in apparatus (5) is connected to a discharge apparatus (6) for the heat carrier medium, the discharge apparatus (6) preferably comprising a discharge line (13) for the heat carrier medium in the liquid state, the discharge line (13) being connected to the outer pipe (16) of the feed-in apparatus (5).

11. Device according to any of claims 1 to 10, **characterised in that** the feed-in apparatus (5) is connected to a pump device, in particular a circulating pump.

12. Device according to any of claims 1 to 11, **characterised in that** the heat carrier line (7) is connected in a heat-conducting manner to a heat distribution body (8) that is designed for heat exchange with the heat accumulating medium, the heat distribution body (8) preferably comprising a heat transfer element (29) that is connected to the heat carrier line (7) in a heat-conducting manner and a plurality of heat conducting ribs (30) that protrude outwards from the heat transfer element (29), at least one heat conducting rib (30) preferably comprising at least one branch (31), at least one branch (31) in turn preferably comprising an arm (32), the heat distribution body (8) preferably being integrally connected to the heat transfer element (29), the heat distribution body (8) and the heat transfer element (29) preferably being formed by an extruded profile.

13. Device according to claim 12, **characterised in that** the heat transfer element (29) is made of a first metal, in particular aluminium, and the heat carrier line (7) is made of a second metal, in particular steel.

14. Method for the intermediate storage of thermal energy using a device according to claim 1, wherein a heat carrier medium is guided through the heat carrier line (7), wherein heat energy in the heat carrier medium is discharged to a heat accumulating medium, in particular a phase change material, wherein a flow of the heat carrier medium in the vapour state is guided through the inner pipe (15) and a flow of the heat carrier medium in the liquid state is guided though the outer pipe (16) of the double pipe (14) before the flow of the heat carrier medium in the vapour state is merged with the flow of the heat carrier medium in the liquid state, a two-phase flow containing the heat carrier medium in the liquid and the vapour state being produced as a result, which two-phase flow is introduced into the heat carrier line (7).

15. Method according to claim 14, **characterised in that** the heat energy in the heat carrier medium is discharged to the heat accumulating medium via a heat distribution body (8) that is connected to the heat carrier line (7).

## Revendications

1. Dispositif (1) pour l'accumulation temporaire d'énergie thermique, avec un boîtier (3) pour le logement d'un support d'accumulation thermique, plus particulièrement d'un matériau à changement de phase, avec au moins une conduite de fluide caloporteur (7) disposée dans le boîtier (3), qui est reliée avec un dispositif d'alimentation (5) pour l'introduction d'un fluide caloporteur dans un processus d'accumulation thermique, le dispositif d'alimentation (5) comprenant une double conduite tubulaire (14) avec une conduite tubulaire interne (15), conduisant le fluide caloporteur sous forme de vapeur, et avec une conduite tubulaire externe (16), conduisant le fluide caloporteur sous forme liquide, et la conduite tubulaire interne (15) comprenant, au niveau d'une ouverture de passage (18) entre la conduite tubulaire externe (16) et la conduite de fluide caloporteur (7), une ouverture de sortie (20), un écoulement à deux phases contenant le fluide caloporteur à l'état liquide et à l'état de vapeur pouvant être introduit dans la conduite de fluide caloporteur (7), **caractérisé en ce que** l'ouverture de sortie (20) est disposée sur la conduite tubulaire interne (15) globalement en face de l'ouverture de passage (18) entre la conduite tubulaire externe (16) et la conduite de fluide caloporteur (7).

2. Dispositif selon la revendication 1, **caractérisé en ce que** l'ouverture de sortie (20) de la conduite tubulaire interne (15) présente un diamètre inférieur à celui de l'ouverture de passage (18) entre la conduite tubulaire externe (16) et la conduite de fluide caloporteur (7).

3. Dispositif selon la revendication 1 ou 2, **caractérisé en ce que** l'ouverture de sortie (20) est réalisée sur la surface d'enveloppe de la conduite tubulaire interne (15).

4. Dispositif selon l'une des revendications 1 à 3, **caractérisé en ce que** la conduite tubulaire interne (15) comprend un élément de sortie (22), de section plus particulièrement circulaire, disposé à distance de la surface d'enveloppe de la conduite tubulaire interne (15), qui comprend, au niveau de l'extrémité libre, l'ouverture de sortie (20).

5. Dispositif selon l'une des revendications 1 à 4, **caractérisé en ce que**, dans la direction longitudinale et/ou dans la direction circonférentielle de la conduite tubulaire interne, sont prévues plusieurs ouvertures de sortie (20), de préférence exactement une conduite de fluide caloporteur (7) étant prévue pour chaque ouverture de sortie (20) de la conduite tubulaire interne (15).

6. Dispositif selon la revendication 5, **caractérisé en ce que** la conduite tubulaire interne (15) comprend au moins deux séries d'ouvertures de sortie (20) s'étendant dans la direction longitudinale, les deux séries d'ouvertures de sortie (20) étant écartées entre elles dans la direction circonférentielle, les ouvertures de sortie (10) d'une série étant de préférence disposées de manière décalée par rapport aux ouvertures de sortie (20) de l'autre série.

7. Dispositif selon la revendication 6, **caractérisé en ce que** les conduites de fluide caloporteur (7) comprenant les ouvertures de passage (18) comprennent, dans la position de fonctionnement, des portions de liaison (23) inclinées par rapport à la verticale, dont les axes longitudinaux sont disposés de préférence perpendiculairement aux plans longitudinaux des ouvertures de sortie (20) correspondantes sur la conduite tubulaire interne (15).

8. Dispositif selon la revendication 5, **caractérisé en ce que** la conduite tubulaire interne (15) comprend une seule série d'ouvertures de sortie (20), qui sont disposées, par rapport à la position de fonctionnement, sur le côté supérieur de la conduite tubulaire interne (15).

9. Dispositif selon l'une des revendications 1 à 8, **caractérisé en ce que** le dispositif d'alimentation (5) comprend plusieurs doubles conduites tubulaires (15), disposées de préférence de manière globalement parallèle, qui sont reliées avec une conduite de répartition (17) commune.

10. Dispositif selon l'une des revendications 1 à 9, **caractérisé en ce que** l'au moins une conduite de fluide caloporteur (7) est reliée, sur le côté opposé au dispositif d'alimentation (5), avec un dispositif d'évacuation (6) pour le fluide caloporteur, le dispositif d'évacuation (6) comprenant de préférence une conduite d'évacuation (13) pour le fluide caloporteur à l'état liquide, la conduite d'évacuation (13) étant reliée avec la conduite tubulaire externe (16) du dispositif d'alimentation (5).

11. Dispositif selon l'une des revendications 1 à 10, **caractérisé en ce que** le dispositif d'alimentation (5) est relié avec un dispositif de pompage, plus particulièrement une pompe de circulation.

12. Dispositif selon l'une des revendications 1 à 11, **caractérisé en ce que** la conduite de fluide caloporteur (7) est reliée de manière thermoconductrice avec un corps de répartition thermique (8) conçu pour l'échange thermique avec le support d'accumulation thermique, le corps de répartition thermique (8) comprenant de préférence un élément de transmission thermique (29) relié de manière thermoconductrice avec la conduite de fluide caloporteur (7) et plusieurs nervures de conduction thermique (30) s'éloignant de l'élément de transmission thermique (29) vers l'extérieur, au moins une nervure de conduction thermique (30) comprenant de préférence au moins un embranchement (31), au moins un embranchement (31) comprenant de préférence lui-même un embranchement (32), le corps de répartition thermique (8) étant relié de préférence d'une seule pièce avec l'élément de transmission thermique (29), le corps de répartition thermique (8) et l'élément de transmission thermique (29) étant constitués de préférence d'un profilé extrudé.

13. Dispositif selon la revendication 12, **caractérisé en ce que** l'élément de transmission thermique (29) est constitué d'un premier métal, plus particulièrement d'aluminium, et la conduite de fluide caloporteur (7) est constituée d'un deuxième métal, plus particulièrement d'acier.

14. Procédé d'accumulation temporaire d'énergie thermique à l'aide d'un dispositif selon la revendication 1, un fluide caloporteur étant guidé à travers la conduite de fluide caloporteur (7), l'énergie thermique du fluide caloporteur étant transmise à un support d'accumulation thermique, plus particulièrement un matériau à changement de phase, un écoulement du fluide caloporteur à l'état de vapeur étant guidé à travers la conduite tubulaire interne (15) et un écoulement du fluide caloporteur à l'état liquide étant guidé à travers la conduite tubulaire externe (16) de la double conduite tubulaire (14) avant que l'écoulement du fluide caloporteur à l'état de vapeur soit mélangé avec l'écoulement du fluide caloporteur à l'état liquide, ce qui produit un écoulement à deux phases contenant le fluide caloporteur à l'état liquide et à l'état de vapeur, qui est introduit dans la conduite de fluide caloporteur (7).

15. Procédé selon la revendication 14, **caractérisé en ce que** l'énergie thermique du fluide caloporteur est transmise au support d'accumulation thermique par l'intermédiaire d'un corps de répartition thermique (8) relié avec la conduite de fluide caloporteur (7).
